# EUROPEAN PATENT SPECIFICATION

(11) **EP 1 149 781 B1**
(45) Date of publication and mention of the grant of the patent: **04.08.2004**
(21) Application number: 01830221.6
(22) Date of filing: 29.03.2001
(51) Int. Cl.: B65G 47/64, B65G 57/32

(54) **A machine for the ordely grouping of products**
Vorrichtung zum geordneten Gruppieren von Produkten
Dispositif pour grouper d'une façon ordonnée des produits

(30) Priority: 04.04.2000 IT BO200186
(43) Date of publication of application: 31.10.2001
(73) Proprietor: T.M.C. S.P.A., 40057 Cadriano Di Granarolo Emilia, Bologna (IT)
(72) Inventor: Zagnoni, Christian, 40010 Calcara di Crespellano (Bologna) (IT)
(74) Representative: Pederzini, Paolo

(56) References cited:
- US-A- 3 340 672
- US-A- 3 455 085
- US-A- 5 092 448

## Description

The present invention relates to the collective packaging into orderly groups of products and, in particular, it pertains to a machine for the ordering of the products, slaved to a generic user, constituted for instance by a machine for preparing a collective package of the products grouped in units.

For the packaging of products in orderly groups, from the document US 3455085, an automatic machine is known that forms a vertical stack of products, by layering sets of said products which are received along a substantially horizontal feeding line.

More specifically, said machine is associated with a line for advancing the products provided with a plane for supporting said products; with a stacker apparatus provided with vertically superposed planes, for receiving the products; and with an inclined plane positioned between the support plane and the stacker apparatus. The inclined plane is pivotally articulated on a horizontal pivot and it is associated to actuator means whose selective operation allows to vary the level of an outlet end thereof and to position it alternatively at the level of the planes of the stacker apparatus.

The products are made to translate along the line of advance by means of a first and a second conveyor having respectively a pair of flexible elements for instance continuous parallel belts or chains, wound in a loop about at least a pair of end pulleys, and about a plurality of intermediate transmission pulleys. The belts or chains take their motion from one of the end pulleys, which is motorised, and sustain, in mutually paired fashion, stepped bars which thrust the products in an orderly manner along the line of advance. The belts or chains and the inclined plane are motorised in synchronism, in such a way as to subdivide in an orderly manner, on the various planes of the layering apparatus, the total amount of products received at the inlet of the line of advance.

In this machine, the first and the second conveyor have end pulleys, contiguous to the product entry area, mounted in mutually coaxial condition.

This feature implies that the machine can operate solely as a machine for layering products. A different use of the machine, for instance for feeding the products towards a single plane of the layering apparatus, although theoretically achievable by maintaining the inclined plane constantly in a single operative condition, is paid for with a considerable loss of productivity. The feeding of the products on a single plane of the layering apparatus entails the need to have one of the conveyors function with no load, i.e. making the products advance along the line with mutual distances between consecutive products that are exactly doubled relative to the operation as a layering machine.

Such a machine is therefore economically productive only for one specific use: an alternative use thereof causing a variation in the useful potential of the machine.

In packaging machines, on the other hand, the need is felt to package groups of products arranged both in a single layer and in vertically superposed layers, by employing a single machine, i.e. by means of a versatile machine that is able easily to suit different, alternative uses.

The aim of the present invention therefore is to provide a solution to this problem by means of a machine that is able to be employed indifferently as a product layering machine or as a product feeding machine, without suffering from any variation in productivity from one operative condition to the other.

In accordance with the invention, said aim is achieved by a machine for ordering products, comprising a line of advance provided with: a plane for supporting products in transit, a stacker apparatus provided with vertically superposed planes for receiving the products, and an inclined plane positioned between the support plane and the stacker apparatus, said inclined plane having a first end aligned with the support plane and being pivotally articulated to vary the level of one of its own outlet end and place it at the level of the planes of the stacker apparatus; a first and a second conveyor for making the products advance along the line of advance, provided with at least a continuous belt or chain which is wound in a loop about at least a pair of end pulleys, whereof at least one is motorised, and about a plurality of intermediate transmission pulleys, and supports stepped bars, able to thrust the products along the line of advance; the machine being characterised in that said first and second conveyor have respective first end pulleys, mutually translated along the line of advance of the products and proximate to the opposite ends of the support plane, which delimit a segment of the line of advance of the products which is travelled solely by the thrust bars of one of the conveyors.

The translation of the pulleys entails that the machine is able always to handle the maximum nominal flow rate of products (which is correlated to the mounting pitch of the thrust bars and to the velocity of travel of the belts), independently from the orientation assumed by the inclined plane. Hence, the machine can provide multiple, alternative possibilities of use, depending on the command imparted to the inclined plane and can provide such possibilities of use always at its own maximum potential.

The technical features of the invention, according to the aforesaid aims, can be clearly noted from the content of the claims set out below and its advantages shall become more readily apparent in the detailed description that follows, made with reference to the accompanying drawings, which represent an embodiment provided purely by way of non limiting example, in which:

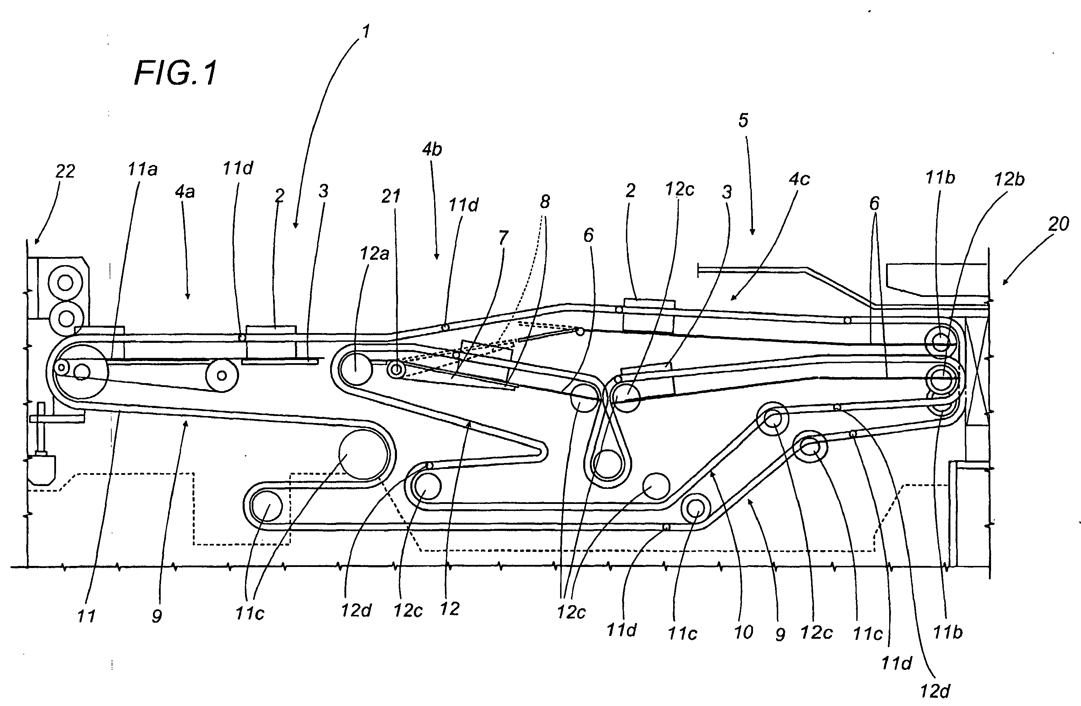

- Figure 1 is a global elevation view of a machine according to the invention.

With reference to the accompanying drawings, the reference number 1 globally shows a machine for the orderly grouping of products 2, slaved to a generic user 20 - represented for instance by a machine for packaging paper rolls for hygienic or domestic use - grouped collectively in orderly groups. The machine 1 essentially comprises a line of advance 4a, 4b, 4c of products 2 and a pair of conveyors 9, 10 associated to the line of advance 4a, 4b, 4c of the products 2 and located substantially below it.

The line of advance 4a, 4b, 4c is provided with: a plane 3 for supporting the products 2 in transit; a stacker apparatus 5, in turn, provided vertically superposed plane 6 for receiving the products 2; and an inclined plane 7 positioned between the support plane 3 and the stacker apparatus 5. The inclined plane 7 has a first end 21 aligned with the support plane 3 and is pivotally articulated to vary the level of its own outlet end 8 and place it at the level of the planes 6 of the stacker apparatus 5.

The first and the second conveyor 9, 10 provided for making the products 2 advance along the line of advance 4a, 4b, 4c, comprise a pair of parallel continuous belts or chains 11, 12, which are wound in a loop about at least a pair of end pulleys 11a, 11b, 12a, 12b, one of which is motorised, and about a plurality of freely rotating intermediate transmission pulleys 11c, 12c.

The belts or chains 11, 12 which form two loops elongated longitudinally to the line of advance 4a, 4b, 4c, having different dimensions, support, transversely to the line of advance 4a, 4b, 4c, a plurality of stepped bars 11d, 12d, able to thrust the products 2 along the line of advance 4 from the inlet end 22 of the machine 1 (located on the left side of Figure 1) towards the user 20 which, in Figure 1, is instead located on the right side.

The bars 12d of the second conveyor 10, having lesser longitudinal development, have double pitch relative to the pitch of the first conveyor 9.

The first and the second conveyor 9, 10 have respective first end pulleys 11a, 12a, mutually translated along the line of advance 4a, 4b, 4c of the products 2 and proximate to the opposite ends of the support plane 3. Such pulleys 11a, 12a thereby delimit a segment 4a of the line of advance 4 of the products 2 which is travelled solely by the thrust bars I 1d of one of said conveyors 11.

In use, the orientation of the inclined plane 7 of the machine 1 is controlled by actuators and by means for controlling the operation of the actuators (not shown) which, when the machine 1 is operated as a product layering machine, selectively activate the orientation of the inclined plane 7 and sequentially place its outlet end 8 at the level of the planes 6 of the stacker apparatus 5, subdividing the total flow rate of products 2 received from the support plane 3 among said planes. Vice versa, when the machine is to be used as a simple feeder of products 2 towards the user 20, the inclined plane 7 is maintained in constant alignment with one of the planes 6 of the stacker apparatus 5 in such a way as to route the entire flow rate of incoming products 2 onto them.

It is important to stress that in this condition it is not necessary to reduce the quantity of products 2 that transit in the unit of time along the support plane 3; i.e. all the thrust bars 11d of the first conveyor 9 have products 2 present which allows the machine 1 to operate always at its maximum design potential.

The machine according to the invention thus allows for a multiple usage, without variation from one use to the other of the flow rate of products 2 along the line of advance 4a, 4b, 4c. Moreover, it also has the advantage of a high ease of inspection, correlated with the placement of the conveyors 9, 10 below the line of advance 4a, 4b, 4c: which favours a convenient and easy access for inspection and maintenance operations.

The invention thus conceived is clearly suitable for industrial application. Moreover, all components can be replaced by technically equivalent elements. Furthermore, it can be subject to numerous modifications and variations, without thereby departing from the scope of the inventive concept; as set forth in the appended claims.

## Claims

1. A machine for the orderly grouping of products (2), comprising a line of advance (4a, 4b, 4c) provided with: a plane (3) for supporting the products (2) in transit, a stacker apparatus (5) having vertically superposed planes (6) for receiving the products (2), and an inclined plane (7) positioned between the support plane (3) and the stacker apparatus (5), said inclined plane (7) having a first end (21) aligned with the support plane (3) and being pivotally articulated to vary the level of its own outlet end (8) and place it at the level of the planes (6) of the stacker apparatus (5); a first and a second conveyor (9, 10) for making the products (2) advance along the line of advance (4a, 4b, 4c), provided with at least a continuous belt or chain (11, 12) which is wound in a loop about at least a pair of end pulleys (11a, 11b, 12a, 12b), at least one of which is motorised, and about a plurality of intermediate transmission pulleys (1 1c, 12c), said belts or chains (11, 12) supporting stepped bars (11d, 12d), able to thrust the products (2) along the line of advance (4); said machine (1) being **characterised in that** said first and second conveyor (9, 10) have respective first end pulleys (11a, 12a), mutually translated along the line of advance (4a, 4b, 4c) of the products (2) and proximate to the opposite ends of the support plane (3), said pulleys (11a, 12a) delimiting a segment (4a) of the line of advance (4) of the products (2) travelled solely by the thrust bars (11d) of one of said conveyors (9).

2. A machine as claimed in claim 1, **characterised in that** it comprises means for selectively controlling the orientation of the inclined plane (7) able to position sequentially the outlet end (8) of the inclined plane (7) at the level of the planes (6) of the stacker apparatus (5), subdividing between said planes (6) the total flow rate of the products (2) received from the support plane (3); or to maintain the inclined plane (7) in constant alignment with one of the planes (6) of the stacker apparatus (5) routing, instead, the entire flow rate of incoming products (2).

3. A machine as claimed in one of the previous claims, **characterised in that** said first and second conveyor (9, 10) are located substantially below the line of advance (4a, 4b, 4c) of the products (2).

4. A machine as claimed in one of the previous claims, **characterised in that** the bars (12d) of the second conveyor (10) have double pitch relative to the bars (11d) of the first conveyor (9).

## Patentansprüche

1. Eine Maschine zum geordneten Gruppieren von Produkten (2), die eine Vorschublinie (4a, 4b, 4c) umfasst und ausgestattet ist mit: einer Fläche (3) als Auflage für die durchlaufenden Produkte (2), einer Stapelvorrichtung (5) mit vertikal übereinander angeordneten Flächen (6) zur Übernahme der Produkte (2), sowie einer Schrägfläche (7) die zwischen der Auflagefläche (3) und der Stapelvorrichtung (5) angeordnet ist, wobei die genannte schräge Fläche (7) ein erstes Ende aufweist (21), das mit der Auflagefläche (3) fluchtet, und so auf einem Drehgelenk gelagert ist, dass die Höhe ihres eigenen Ausgabeendes (8) verändert und auf Höhe der Flächen (6) der Stapelvorrichtung (5) angeordnet werden kann; einem ersten und einem zweiten Förderer (9, 10) zur Vorwärtsbewegung der Produkte (2) entlang der Vorschublinie (4a, 4b, 4c), der mit mindestens einem endlosen Riemen oder einer endlosen Kette (11, 12) ausgestattet ist, der bzw. die in einer Schleife um mindestens ein Paar Endriemenscheiben (11a, 11b, 12a, 12b), von denen mindestens eine motorisiert ist, sowie um mehrere dazwischen angeordnete Übertragungsscheiben (11c, 12c) gelegt ist, wobei die genannten Riemen oder Ketten (11, 12) in bestimmten Abstandschritten Leisten (11d, 12d) tragen, die dazu dienen, die Produkte (2) entlang der Vorschublinie (4) zu verschieben; wobei die genannte Maschine (1) dadurch charakterisiert ist, dass der genannte erste und zweite Förderer (9, 10) jeweils erste Endriemenscheiben (11a, 12a) aufweisen, die wechselseitig entlang der Vorschublinie (4a, 4b, 4c) der Produkte (2) versetzt und nahe der gegenüberliegenden Enden der Auflagefläche (3) angeordnet sind, und dass die genannten Scheiben (11a, 12a) einen Abschnitt (4a) der Vorschublinie (4) für die Produkte (2) begrenzen, der nur von den Schiebeleisten (11d) eines der genannten Förderer (9) durchlaufen wird.

2. Eine Maschine nach Anspruch 1, **dadurch gekennzeichnet, dass** sie Vorrichtungen für die selektive Steuerung der Ausrichtung der Schrägfläche (7) umfasst, die es ermöglichen das Ausgabeende (8) der Schrägfläche (7) auf Höhe der Flächen (6) der Stapelvorrichtung (5) zu platzieren, um die gesamte Durchlaufmenge der Produkte (2), die von der Auflagefläche (3) übernommen wird, auf die genannten Flächen (6) zu verteilen; oder die Schrägfläche (7) konstant mit einer der Flächen (6) der Stapelvorrichtung (5) gefluchtet zu halten, um die gesamte Durchlaufmenge der ankommenden Produkte (2) darauf zu leiten.

3. Eine Maschine nach einem der vorstehenden Ansprüche, **dadurch gekennzeichnet, dass** der erste und der zweite Förderer (9, 10) im Wesentlichen unterhalb der Vorschublinie (4a, 4b, 4c) der Produkte (2) angeordnet sind.

4. Eine Maschine nach einem der vorstehenden Ansprüche, **dadurch gekennzeichnet, dass** die Leisten (12d) des zweiten Förderers (10) einen doppelten Schrittabstand im Vergleich zu den Leisten (11d) des ersten Förderers (9) aufweisen.

## Revendications

1. Un dispositif pour grouper d'une façon ordonnée des produits (2), comprenant une ligne d'avancement (4a, 4b, 4c) équipée de : un plan (3) pour supporter les produits (2) en transit, un appareil empileur (5) ayant des plans (6) verticalement superposés et destinés à recevoir les produits (2), et un plan incliné (7) situé entre le plan de support (3) et l'appareil empileur (5), ledit plan incliné (7) ayant une première extrémité (21) alignée avec le plan de support (3) et étant articulé de façon pivotante pour faire varier le niveau de sa propre extrémité de sortie (8) et la placer au niveau des plans (6) de l'appareil empileur (5) ; un premier et un second convoyeurs (9, 10) destinés à faire avancer les produits (2) le long de la ligne d'avancement (4a, 4b, 4c), équipés d'au moins une courroie ou chaîne sans fin respective (11, 12) qui est enroulée en boucle autour d'au moins une paire de poulies d'extrémité respectives (11a, 11b, 12a, 12b), dont au moins une est motorisée, et autour d'une pluralité de poulies de transmission intermédiaires (11c, 12c) respectives, lesdites courroies ou chaînes (11, 12) supportant des barres (11d, 12d) espacées à intervalles donnés, à même de pousser les produits (2) le long de la ligne d'avancement (4) ; ledit dispositif (1) étant **caractérisé en ce que** lesdits premier et second convoyeurs (9, 10) ont des premières poulies respectives d'extrémité (11a, 12a), réciproquement translatées le long de la ligne d'avancement (4a, 4b, 4c) des produits (2) et proches des extrémités opposées du plan de support (3), lesdites poulies (11a, 12a) délimitant un tronçon (4a) de la ligne d'avancement (4) des produits (2) parcouru seulement par les barres de poussée (11d) d'un des convoyeurs (9) en question.

2. Le dispositif selon la revendication 1, **caractérisé en ce qu'**il comprend des moyens pour commander sélectivement l'orientation du plan incliné (7), à même de positionner en séquence l'extrémité de sortie (8) du plan incliné (7) au niveau des plans (6) de l'appareil empileur (5), pour subdiviser entre lesdits plans (6) le flux total des produits (2) arrivant du plan de support (3) ; ou à même de maintenir le plan incliné (7) en alignement constant avec un des plans (6) de l'appareil empileur (5) pour y diriger, au contraire, tout le flux de produits (2) qui arrivent.

3. Le dispositif selon l'une des revendications précédentes, **caractérisé en ce que** lesdits premier et second convoyeurs (9, 10) sont situés essentiellement au-dessous de la ligne d'avancement (4a, 4b, 4c) des produits (2).

4. Le dispositif selon l'une des revendications précédentes, **caractérisé en ce que** les barres (12d) du second convoyeur (10) ont un pas double par rapport aux barres (11d) du premier convoyeur (9).
